(19) **Europäisches Patentamt / European Patent Office / Office européen des brevets**

(11) **EP 1 435 018 B1**

(12) **FASCICULE DE BREVET EUROPEEN**

(45) Date de publication et mention
de la délivrance du brevet:
**12.12.2007 Bulletin 2007/50**

(21) Numéro de dépôt: **02800635.1**

(22) Date de dépôt: **07.10.2002**

(51) Int Cl.:
*G02F 1/1333* (2006.01)   *G02F 1/1335* (2006.01)

(86) Numéro de dépôt international:
**PCT/FR2002/003409**

(87) Numéro de publication internationale:
**WO 2003/032057 (17.04.2003 Gazette 2003/16)**

(54) **ECRAN PLAT A CRISTAL LIQUIDE FONCTIONNANT EN MODE REFLECTIF ET SON PROCEDE DE REALISATION**

FLACHE FLÜSSIGKRISTALLANZEIGE FÜR BETRIEB IM REFLEXIONSMODUS UND VERFAHREN ZU IHRER HERSTELLUNG

FLAT LIQUID CRYSTAL DISPLAY OPERATING IN REFLECTIVE MODE AND METHOD FOR MAKING SAME

(84) Etats contractants désignés:
**AT BE BG CH CY CZ DE DK EE ES FI FR GB GR IE IT LI LU MC NL PT SE SK TR**

(30) Priorité: **09.10.2001 FR 0112953**

(43) Date de publication de la demande:
**07.07.2004 Bulletin 2004/28**

(73) Titulaire: **COMMISSARIAT A L'ENERGIE ATOMIQUE**
**75015 Paris (FR)**

(72) Inventeurs:
• **ASPAR, Bernard**
**F-38140 Rives (FR)**
• **CLERC, Jean-Frédéric**
**F-38320 Brie (FR)**

(74) Mandataire: **Poulin, Gérard**
**Société BREVATOME**
**3, rue du Docteur Lancereaux**
**75008 Paris (FR)**

(56) Documents cités:
**EP-A- 1 122 585        US-A- 6 130 736**

• **PATENT ABSTRACTS OF JAPAN vol. 1999, no. 14, 22 décembre 1999 (1999-12-22) -& JP 11 249108 A (SEIKO EPSON CORP), 17 septembre 1999 (1999-09-17)**
• **PATENT ABSTRACTS OF JAPAN vol. 2000, no. 19, 5 juin 2001 (2001-06-05) -& JP 2001 042317 A (SEIKO EPSON CORP), 16 février 2001 (2001-02-16)**
• **PATENT ABSTRACTS OF JAPAN vol. 009, no. 262 (P-398), 19 octobre 1985 (1985-10-19) -& JP 60 112022 A (MATSUSHITA DENKI SANGYO KK), 18 juin 1985 (1985-06-18)**
• **PATENT ABSTRACTS OF JAPAN vol. 2000, no. 20, 10 juillet 2001 (2001-07-10) -& JP 2001 083494 A (SEIKO EPSON CORP), 30 mars 2001 (2001-03-30)**
• **PATENT ABSTRACTS OF JAPAN vol. 017, no. 305 (P-1554), 11 juin 1993 (1993-06-11) -& JP 05 027224 A (HITACHI LTD), 5 février 1993 (1993-02-05)**
• **PATENT ABSTRACTS OF JAPAN vol. 018, no. 007 (P-1670), 7 janvier 1994 (1994-01-07) & JP 05 249422 A (CASIO COMPUT CO LTD), 28 septembre 1993 (1993-09-28)**
• **SHIMODA T ET AL: "POLYSILICON TFT ON PLASTICS" PROCEEDINGS OF THE SPIE, SPIE, BELLINGHAM, VA, US, vol. 4295, janvier 2001 (2001-01), pages 52-59, XP008004396**

**Description**

**DOMAINE TECHNIQUE**

L'invention concerne un écran plat à cristal liquide fonctionnant en mode réflectif. Elle concerne également un procédé de réalisation d'un tel écran plat.

**ETAT DE LA TECHNIQUE ANTERIEURE**

Les futurs systèmes portatifs (par exemple téléphones portables, cartes à puces ou encore assistants personnels du futur) intègrent de plus en plus de fonctions. La réalisation de ces systèmes, comme par exemple les assistants personnels du futur, utilisent de nombreuses briques technologiques. Parmi ces briques technologiques on trouve : les écrans à cristal liquide, le système d'exploitation, le microprocesseur, les batteries. Parmi ces composants, les écrans sont ceux qui occupent le plus de surface et leur intégration dans le système est un point important.

Le développement en masse de ces objets ne se réalisera que si leur coût diminue ou s'ils permettent des fonctionnalités différentes. Aujourd'hui, la majorité des écrans plats en matrice active fonctionnent en mode transmissif, ce qui entraîne une consommation d'énergie non négligeable. Pour résoudre ce problème, d'autres technologies ont été mises au point. Ces technologies permettent d'obtenir des écrans qui fonctionnent en mode réflectif, comme ceux décrits dans le doument JP11249108 mais elles sont beaucoup plus complexes que celles mises en oeuvre pour les écrans transmissifs.

Un des défis à relever dans le domaine des écrans plats est donc de réaliser des écrans qui consomment moins, à un coût inférieur à celui des d'écrans réflectifs connus.

Par ailleurs, les écrans plats à cristal liquide sont majoritairement réalisés sur des supports en verre. Le verre présente de nombreux avantages (taille, coût, etc.). Cependant, il a un principal défaut qui est sa tenue au choc. Les composants ou dispositifs réalisés sur ces supports nécessitent alors l'utilisation de protections supplémentaires pour pouvoir les intégrer dans les systèmes portatifs. Or, pour que l'intégration de ces composants soit maximale, il apparaît intéressant d'intégrer ces composants sur le support définitif. Dans de nombreux cas, ce support peut être avantageusement en plastique. Il serait alors particulièrement intéressant d'obtenir par exemple un écran sur un support plastique qui associe à la fois un faible coût de fabrication, un faible poids et une bonne solidité au choc par comparaison avec le verre. Cette application est particulièrement intéressante pour les téléphones portables de nouvelle génération. Or, ces écrans à cristal liquide et à matrice active nécessitent l'utilisation de polariseurs qui sont eux-mêmes généralement en matière plastique. De façon avantageuse, il serait très intéressant de pouvoir les utiliser à la fois comme fonction active (polarisation de la lumière) et comme fonction passive (support mécanique souple et robuste).

De plus, pour les systèmes portatifs, comme par exemple les cartes à puces mais aussi les assistants personnels, il est nécessaire d'avoir également des composants de faible épaisseur, pour des problèmes de poids et de souplesse (pour s'adapter à celle de la carte à puce).

Dans un autre domaine, on connaît différentes techniques pour reporter des couches d'un support vers un autre support. On peut citer par exemple les techniques divulguées par T. HAMAGUCHI et al. dans Proc. IEDM, 1985, page 688. Ces techniques présentent un grand intérêt car elles permettent de transférer une couche réalisée à partir d'un premier substrat (par exemple de type SOI) vers un autre substrat. Cependant, elles nécessitent la consommation du premier substrat qui est détruit au cours du procédé. De plus, elles ne permettent le transfert homogène d'un film mince que grâce à la présence d'une couche enterrée d'oxyde de silicium qui peut être utilisée comme couche d'arrêt par rapport à une gravure chimique.

Plus récemment, d'autres techniques ont été proposées pour reporter des transistors TFT (réalisés en polysilicium sur un substrat en verre) sur des substrats en plastique. On peut se référer à ce sujet à l'article de S. UTSUNOMIYA et al. dans Proc. IDS 2000, page 916 ou au document EP-A-0 924 769. Ces méthodes sont basées sur la création d'une couche de séparation sur un substrat (généralement en silicium amorphe) qui, après réalisation de composants sur cette couche, permettra la séparation et le report sur un autre substrat. Dans ce cas, la séparation (ou exfoliation) est obtenue à l'aide d'une irradiation avec de la lumière (typiquement un faisceau type laser). Une telle irradiation est cependant difficile à maîtriser pour les grandes surfaces. En effet, une inhomogénéité d'illumination doit entraîner une exfoliation homogène, ce qui peut conduire à une détérioration du film superficiel. Ceci constitue une difficulté technologique non négligeable.

Parmi les procédés de report, il est également possible d'utiliser les méthodes de transfert de couches minces de matériaux contenant ou pas tout ou partie d'un composant microélectronique. Ces méthodes sont basées sur la création d'une couche fragile enterrée dans un matériau à partir de l'introduction d'une ou plusieurs espèces gazeuses. On peut se référer à ce sujet aux documents FR-A-2 681 472 (correspondant au brevet américain 5 374 564), FR-A-2 748 851 (correspondant au brevet américain 6 020 252), FR-A-2 748 850 (correspondant au brevet américain 6 190 998) et FR-A-2 773 261. Ces procédés sont généralement utilisés avec l'objectif de détacher l'ensemble d'un film d'un substrat initial pour le reporter sur un support. Le film mince obtenu contient alors une partie du substrat. Ces films peuvent servir de couches actives pour la réalisation de composants électroniques ou optiques. En effet, le principal intérêt de ces procédés est qu'ils permettent d'obtenir des films minces de substrats monocristallins sur des supports différents. Ces films peuvent contenir tout ou partie d'un composant.

## EXPOSÉ DE L'INVENTION

Un premier objet de l'invention consiste à transformer un écran plat à cristal liquide, normalement conçu pour fonctionner en mode transmissif, pour lui permettre de fonctionner en mode réflectif de façon à consommer moins d'énergie. Ainsi, il est possible d'utiliser des écrans plats à matrice active de type "Twisted Nematic" (nématique en hélice), "Super Twisted Nematic", "Vertically Aligned" et "In Plane Switching" en mode réflectif alors que ces écrans fonctionnent préférentiellement en mode transmissif.

L'invention permet en outre, dans un mode particulier de réalisation, d'obtenir des écrans sur des supports qui sont souples, robustes, peu chers et qui permettent d'intégrer plus facilement l'écran dans son support définitif.

L'invention a donc pour objet un écran plat à cristal liquide fonctionnant en mode réflectif comprenant une couche de cristal liquide d'épaisseur $e_1$ confinée entre des premiers moyens de confinement transparents et des seconds moyens de confinement transparents, les premiers moyens de confinement transparents possédant une face externe, destinée à recevoir de la lumière incidente à l'écran, et une face interne supportant des premières électrodes transparentes d'application d'un champ électrique au cristal liquide, les seconds moyens de confinement transparents possédant une face externe, supportant un réflecteur destiné à réfléchir de la lumière traversant les seconds moyens de confinement transparents, et une face interne supportant des secondes électrodes transparentes d'application d'un champ électrique au cristal liquide, caractérisé par l'une des alternatives suivantes :

- soit, les seconds moyens de confinement transparents comprennent, entre leur face interne et leur face externe, une couche formant filtre coloré d'épaisseur $e_2$ et constituée d'une mosaïque d'éléments de largeur 1, une couche de verre ou de $SiO_2$ d'épaisseur $e_3$ et d'indice de réfraction n et une couche formant polariseur d'épaisseur $e_4$, les paramètres $e_1$, $e_2$, $e_3$, $e_4$ et 1 étant choisis de sorte que :

$$\frac{e_1}{2} + e_2 + e_3 + e_4 < \frac{n \times 1}{4} \,,$$

- soit, les premiers moyens de confinement transparents comprennent, entre leur face interne et leur face externe, une couche formant filtre coloré constituée d'une mosaïque d'éléments de largeur 1, et les seconds moyens de confinement transparents comprennent, entre leur face interne et leur face externe, une couche de verre ou de $SiO_2$ d'épaisseur $e_3$ et d'indice de réfraction n et une couche formant polariseur d'épaisseur $e_4$, les paramètres $e_1$, $e_3$, $e_4$ et 1 étant choisis de sorte que :

$$\frac{e_1}{2} + e_3 + e_4 < \frac{n \times 1}{4} \,.$$

Le réflecteur peut être un film métallique.

Avantageusement, la couche formant polariseur des seconds moyens de confinement transparents est en matière plastique.

De préférence, les premiers moyens de confinement transparents comprennent respectivement, entre leur face interne et leur face externe, une lame de verre et une couche formant polariseur. Cette couche formant polarisateur peut être en matière plastique.

Avantageusement, les premiers moyens de confinement transparents ou les seconds moyens de confinement transparents supportent une matrice active associée aux électrodes transparentes supportées par ces moyens de confinements transparents.

L'invention a aussi pour objet un procédé de réalisation d'un écran plat à cristal liquide comprenant une couche de cristal liquide confinée entre des premiers moyens de confinement transparents et des seconds moyens de confinement transparents, le procédé comprenant les étapes suivantes :

- réalisation d'une structure comprenant en vis-à-vis lesdits premiers moyens de confinement transparents et un support, lesdits premiers moyens de confinement transparents possédant une face externe à la structure destinée à recevoir de la lumière incidente à l'écran et une face interne à la structure supportant des premières électrodes transparentes d'application d'un champ électrique au cristal liquide, la partie du support située en vis-à-vis des premiers moyens de confinement transparents étant en verre ou en $SiO_2$ d'indice de réfraction n et supportant une couche formant filtre coloré d'épaisseur $e_2$ et constituée d'une mosaïque d'éléments de largeur 1, la couche formant filtre coloré supportant des secondes électrodes transparentes d'application d'un champ électrique au cristal liquide, une couche de cristal liquide d'épaisseur $e_1$ étant confinée entre les premiers moyens de confinement transparents et la couche formant filtre coloré,

- amincissement du support pour ne conserver qu'une couche de verre ou de $SiO_2$ d'épaisseur $e_3$ et d'indice de réfraction n adjacente à la couche formant filtre coloré,
- collage d'une couche formant polariseur d'épaisseur $e_4$ sur la face libre de la couche de verre ou de $SiO_2$, les paramètres $e_1$, $e_2$, $e_3$, $e_4$ et 1 étant choisis de sorte que :

$$\frac{e_1}{2} + e_2 + e_3 + e_4 < \frac{n \times 1}{4}$$

la couche formant filtre coloré, la couche de verre ou de $SiO_2$ et la couche formant polariseur constituant lesdits seconds moyens de confinement transparents,

- mise en place d'un réflecteur destiné à réfléchir de la lumière traversant les seconds moyens de confinement transparents sur la face libre de la couche formant polariseur.

Selon une première variante de mise en oeuvre, lors de l'étape de réalisation de la structure, lesdits premiers moyens de confinement transparents utilisés sont des moyens de confinement comprenant respectivement, entre leur face interne et leur face externe, une lame de verre et une couche formant polariseur. Selon une deuxième variante de mise en oeuvre, lors de l'étape de réalisation de la structure, lesdits premiers moyens de confinement transparents utilisés ne comprennent qu'une lame de verre, le procédé comprenant une étape supplémentaire, postérieure à l'étape d'amincissement du support, consistant à disposer un polariseur sur la lame de verre des premiers moyens de confinement transparents, côté face externe de la structure.

L'amincissement du support peut être réalisé par une méthode choisie parmi la rectification, le polissage mécano-chimique et l'attaque chimique.

Selon une variante de réalisation, lors de l'étape de réalisation de la structure, le support utilisé comprend ladite couche de verre ou de $SiO_2$ d'épaisseur $e_3$ et d'indice de réfraction n séparée du reste du support par une couche d'arrêt, l'étape d'amincissement du support consistant à éliminer d'abord le reste du support puis à éliminer la couche d'arrêt. L'élimination du reste du support peut être obtenue par attaque chimique. L'élimination de la couche d'arrêt peut être réalisée par gravure chimique.

Selon une autre variante de réalisation, lors de l'étape de réalisation de la structure, le support utilisé comprend ladite couche de verre ou de $SiO_2$ d'épaisseur $e_3$ et d'indice de réfraction n séparée du reste du support par une couche de séparation, l'étape d'amincissement du support consistant à éliminer le reste du support jusqu'à la couche de séparation.

Si, lors de l'étape de réalisation de la structure, lesdits premiers moyens de confinement font partie d'un substrat épais, le procédé peut comprendre alors en outre une étape d'amincissement de ce substrat épais pour ne conserver que les premiers moyens de confinement.

Avantageusement, lors de l'étape de réalisation de la structure, une matrice active est associée aux premières électrodes transparentes ou aux secondes électrodes transparentes.

L'invention a encore pour objet un procédé de réalisation d'un écran plat à cristal liquide comprenant une couche de cristal liquide confinée entre des premiers moyens de confinement transparents et des seconds moyens de confinement transparents, le procédé comprenant les étapes suivantes :

- réalisation d'une structure comprenant en vis-à-vis lesdits premiers moyens de confinement transparents et un support, lesdits premiers moyens de confinement transparents possédant une face externe à la structure destinée à recevoir de la lumière incidente à l'écran et une face interne à la structure supportant une couche formant filtre coloré constituée d'une mosaïque d'éléments de largeur 1, la couche formant filtre coloré supportant des premières électrodes transparentes d'application d'un champ électrique au cristal liquide, la partie du support située en vis-à-vis des premiers moyens de confinement transparents étant en verre ou en $SiO_2$ d'indice de réfraction n et supportant des secondes électrodes transparentes d'application d'un champ électrique au cristal liquide, une couche de cristal liquide d'épaisseur $e_1$ étant confinée entre les seconds moyens de confinement transparents et la couche formant filtre coloré,

- amincissement du support pour ne conserver qu'une couche de verre ou de $SiO_2$ d'épaisseur $e_3$ et d'indice de réfraction n supportant les secondes électrodes transparentes,
- collage d'une couche formant polariseur d'épaisseur $e_4$ sur la face libre de la couche de verre ou de $SiO_2$, les paramètres $e_1$, $e_3$, $e_4$ et 1 étant choisis de sorte que :

$$\frac{e_1}{2} + e_3 + e_4 < \frac{n \times l}{4}$$

la couche de verre ou de $SiO_2$ et la couche formant polariseur constituant lesdits seconds moyens de confinement transparents,
- mise en place d'un réflecteur destiné à réfléchir de la lumière traversant les seconds moyens de confinement transparents sur la face libre de la couche formant polariseur.

Selon une première variante de mise en oeuvre, lors de l'étape de réalisation de la structure, lesdits premiers moyens de confinement transparents utilisés sont des moyens de confinement comprenant respectivement, entre leur face interne et leur face externe, la couche formant filtre coloré, une lame de verre et une couche formant polariseur. Selon une deuxième variante de mise en oeuvre, lors de l'étape de réalisation de la structure, lesdits premiers moyens de confinement transparents utilisés ne comprennent qu'une lame de verre et la couche formant filtre coloré, le procédé comprenant une étape supplémentaire, postérieure à l'étape d'amincissement du support, consistant à disposer un polariseur sur la lame de verre des premiers moyens de confinement transparents, côté face externe de la structure.

L'amincissement du support peut être réalisé par une méthode choisie parmi la rectification, le polissage mécano-chimique et l'attaque chimique.

Selon une variante de réalisation, lors de l'étape de réalisation de la structure, le support utilisé comprend ladite couche de verre ou de $SiO_2$ d'épaisseur $e_3$ et d'indice de réfraction n séparée du reste du support par une couche d'arrêt, l'étape d'amincissement du support consistant à éliminer d'abord le reste du support puis à éliminer la couche d'arrêt. L'élimination du reste du support peut être obtenue par attaque chimique. L'élimination de la couche d'arrêt peut être réalisée par gravure chimique.

Selon une autre variante de réalisation, lors de l'étape de réalisation de la structure, le support utilisé comprend ladite couche de verre ou de $SiO_2$ d'épaisseur $e_3$ et d'indice de réfraction n séparée du reste du support par une couche de séparation, l'étape d'amincissement du support consistant à éliminer le reste du support jusqu'à la couche de séparation.

Si, lors de l'étape de réalisation de la structure, lesdits premiers moyens de confinement font partie d'un substrat épais, le procédé peut comprendre alors en outre une étape d'amincissement de ce substrat épais pour ne conserver que les premiers moyens de confinement.

Avantageusement, lors de l'étape de réalisation de la structure, une matrice active est associée aux premières électrodes transparentes ou aux secondes électrodes transparentes.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est une vue en coupe transversale d'une structure empilée destinée à la réalisation d'un écran plat à cristal liquide selon l'invention,
- la figure 2 représente la structure de la figure 1 dans un stade de réalisation plus avancé,
- la figure 3 est une vue en coupe transversale d'un écran plat à cristal liquide selon l'invention.

## DESCRIPTION DETAILLEE DE MODES DE REALISATION DE L'INVENTION

L'invention consiste à prélever au moins une des parties constituant l'écran plat, qui sont très minces (écran et circuit d'adressage) et qui sont réalisées sur un support rigide en verre, puis à les reporter directement sur un polariseur réflectif, c'est-à-dire un polariseur associé à une fine couche réflective généralement constituée d'un film métallique. On obtient ainsi une distance très faible entre d'une part le plan image constitué de la couche de cristal liquide, elle-même située à quelques dixièmes de micromètre des filtres coloré, et d'autre part le plan réflecteur. Cette proximité rend le système optique obtenu exempt de tout effet de parallaxe visible à l'oeil, sous réserve que soient respectées certaines contraintes géométriques.

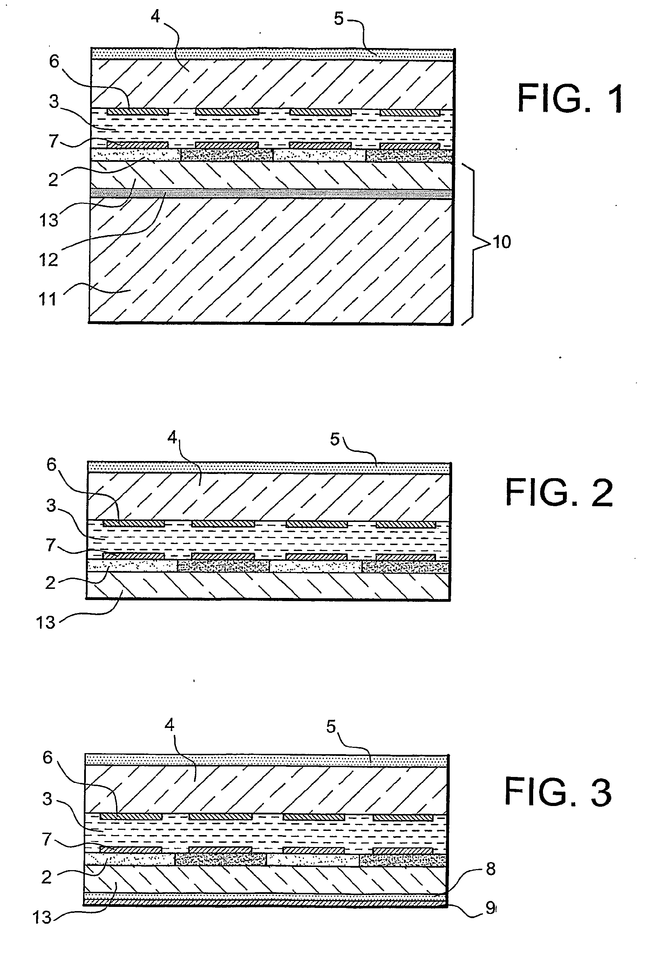

La figure 1 est une vue en coupe transversale d'une structure empilée destinée à la réalisation d'un écran plat à cristal liquide selon l'invention.

La structure est constituée sur un support 10 comprenant une plaque de verre 11 supportant une première couche 12 et une deuxième couche 13. La plaque de verre 11 est par exemple une plaque de grandes dimensions, telle que celles utilisées pour la fabrication des écrans à cristal liquide. Il peut s'agir d'une plaque du verre 1737 de chez Corning. Sur la plaque 11 est déposée une couche 12 qui servira de couche d'arrêt. La couche 12 peut être en silicium amorphe ou polycristallin et avoir 300 nm d'épaisseur. Ces matériaux peuvent être déposés par LPCVD. Dans certains cas, avant le dépôt de la couche 12, une couche intermédiaire peut être déposée sur la plaque 11 pour favoriser l'adhérence. Cette couche intermédiaire est par exemple une couche d'oxyde de silicium.

La couche 13 est déposée sur la couche 12. Il s'agit par exemple d'une couche d'oxyde de silicium d'épaisseur allant de 0,5 $\mu$m à 5 $\mu$m par exemple. La couche 13 est d'une nature proche de celle de la plaque 11.

Sur le support 10, on réalise un écran à cristal liquide de façon identique à celle utilisé sur un substrat standard. Il peut être avantageux de réaliser sur ce type de support au moins tous les circuits de commande. Typiquement, cette technologie ne fait pas intervenir de température supérieure à 400°C.

La structure obtenue comprend, en superposition sur le support 10, un filtre 2 coloré d'épaisseur $e_2$, constitué d'une mosaïque d'éléments de largeur 1, une couche de cristal liquide 3, une lame de verre 4 et une couche 5 formant polariseur et fixée par collage. La lame de verre 4 supporte, côté cristal liquide, un jeu d'électrodes 6. Le filtre coloré 2 supporte, côté cristal liquide, un jeu d'électrodes 7.

Une fois la structure réalisée, le support 10 est aminci. Pour obtenir cet amincissement, on peut utiliser une technique, seule ou en combinaison, choisie parmi la rectification, le polissage mécanique, le polissage mécano-chimique, l'attaque chimique en voie humide ou sèche. Par exemple, la plaque 11 peut être rectifiée jusqu'à une épaisseur d'environ 80 $\mu$m et l'amincissement peut être poursuivi au moyen d'une solution de HF. Pour attaquer uniquement la face à amincir, on peut utiliser par exemple un "spin etcher" ou protéger la face avant et les côtés de la structure.

Une fois la plaque 11 éliminée, la gravure s'arrête sur la couche 12 en silicium qui n'est pas attaquée par la solution de HF. La couche peut être alors éliminée à l'aide d'une gravure chimique (TMAH, KOH ou autre). Le TMAH est intéressant car il présente une bonne sélectivité d'attaque avec $SiO_2$. On obtient la structure représentée à la figure 2.

Dans une variante de réalisation, la couche 5 formant polariseur peut être collée après amincissement du support 10.

La figure 3 montre l'écran plat obtenu après le collage d'une couche 8 formant polariseur sur la face libre de la couche 13 et la fixation d'un réflecteur 9 sur la face libre de la couche 8, le dispositif peut alors fonctionner en mode réflectif.

La condition pour ne pas avoir d'effet de parallaxe visible s'exprime par la relation suivante :

$$\frac{e_1}{2} + e_2 + e_3 + e_4 < \frac{n \times l}{4}.$$

avec :

e₁ épaisseur du cristal liquide 3,
e₂ épaisseur du filtre coloré 2,
e₃ épaisseur de la couche 13,
e₄ épaisseur de la couche 8,
n indice de réfraction de la couche 13,
l largeur d'un élément du filtre coloré 2.

L'épaisseur $e_4$ de la couche 8 formant polariseur peut être de 5 $\mu$m. L'épaisseur $e_2$ du filtre coloré 2 peut être de 1 $\mu$m et la largeur 1 d'un élément peut être de 50 $\mu$m. Le filtre coloré 2 peut supporter des électrodes transparentes 7 en ITO d'environ 0,1 $\mu$m d'épaisseur. La couche de cristal liquide 3 peut avoir une épaisseur $e_1$ de 5 $\mu$m.

Dans ces conditions, si l'indice de réfraction n de la couche 13 vaut 1,4, l'épaisseur $e_3$ de la couche 13 doit être inférieure à 9 $\mu$m.

**Revendications**

**1.** Ecran plat à cristal liquide fonctionnant en mode réflectif comprenant une couche de cristal liquide (3) d'épaisseur

$e_1$ confinée entre des premiers moyens de confinement transparents et des seconds moyens de confinement transparents, les premiers moyens de confinement transparents possédant une face externe, destinée à recevoir de la lumière incidente à l'écran, et une face interne supportant des premières électrodes transparentes (6) d'application d'un champ électrique au cristal liquide, les seconds moyens de confinement transparents possédant une face externe, supportant un réflecteur (9) destiné à réfléchir de la lumière traversant les seconds moyens de confinement transparents, et une face interne supportant des secondes électrodes transparentes (7) d'application d'un champ électrique au cristal liquide, **caractérisé par** l'une des alternatives suivantes :

- soit, les seconds moyens de confinement transparents comprennent, entre leur face interne et leur face externe, une couche formant filtre coloré (2) d'épaisseur $e_2$ et constituée d'une mosaïque d'éléments de largeur 1, une couche de verre ou de $SiO_2$ (13) d'épaisseur $e_3$ et d'indice de réfraction n et une couche formant polariseur (8) d'épaisseur $e_4$, les paramètres $e_1$, $e_2$, $e_3$, $e_4$ et 1 étant choisis de sorte que :

$$\frac{e_1}{2} + e_2 + e_3 + e_4 < \frac{n \ x \ l}{4} \ ,$$

- soit, les premiers moyens de confinement transparents comprennent, entre leur face interne et leur face externe, une couche formant filtre coloré constituée d'une mosaïque d'éléments de largeur 1, et les seconds moyens de confinement transparents comprennent, entre leur face interne et leur face externe, une couche de verre ou de $SiO_2$ d'épaisseur $e_3$ et d'indice de réfraction n et une couche formant polariseur d'épaisseur $e_4$, les paramètres $e_1$, $e_3$, $e_4$ et 1 étant choisis de sorte que :

$$\frac{e_1}{2} + e_3 + e_4 < \frac{n \ x \ l}{4}$$

**2.** Ecran plat à cristal liquide selon la revendication 1, **caractérisé en ce que** le réflecteur (9) est un film métallique.

**3.** Ecran plat à cristal liquide selon l'une des revendications 1 ou 2, **caractérisé en ce que** la couche formant polariseur (8) des seconds moyens de confinement transparents est en matière plastique.

**4.** Ecran plat à cristal liquide selon l'une quelconque des revendications 1 à 3, **caractérisé en ce que** les premiers moyens de confinement transparents comprennent respectivement, entre leur face interne et leur face externe, une lame de verre (4) et une couche formant polariseur (5).

**5.** Ecran plat à cristal liquide selon la revendication 4, **caractérisé en ce que** la couche formant polariseur (5) des premiers moyens de confinement transparents est en matière plastique.

**6.** Ecran plat à cristal liquide selon l'une quelconque des revendications 1 à 5, **caractérisé en ce que** les premiers moyens de confinement transparents ou les seconds moyens de confinement transparents supportent une matrice active associée aux électrodes transparentes supportées par ces moyens de confinements transparents.

**7.** Procédé de réalisation d'un écran plat à cristal liquide comprenant une couche de cristal liquide (3) confinée entre des premiers moyens de confinement transparents et des seconds moyens de confinement transparents, le procédé comprenant les étapes suivantes :

- réalisation d'une structure comprenant en vis-à-vis lesdits premiers moyens de confinement transparents et un support (10), lesdits premiers moyens de confinement transparents possédant une face externe à la structure destinée à recevoir de la lumière incidente à l'écran et une face interne à la structure supportant des premières électrodes transparentes (6) d'application d'un champ électrique au cristal liquide, la partie du support située en vis-à-vis des premiers moyens de confinement transparents étant en verre ou en $SiO_2$ d'indice de réfraction n et supportant une couche formant filtre coloré (2) d'épaisseur $e_2$ et constituée d'une mosaïque d'éléments de largeur 1, la couche formant filtre coloré (2) supportant des secondes électrodes transparentes (7) d'application d'un champ électrique au cristal liquide, une couche de cristal liquide (3) d'épaisseur $e_1$ étant confinée entre les premiers moyens de confinement transparents et la couche formant filtre coloré (2),
- amincissement du support (10) pour ne conserver qu'une couche de verre ou de $SiO_2$ (13) d'épaisseur $e_3$ et d'indice de réfraction n adjacente à la couche formant filtre coloré (2),
- collage d'une couche formant polariseur (8) d'épaisseur $e_4$ sur la face libre de la couche de verre ou de $SiO_2$ (13), les paramètres $e_1$, $e_2$, $e_3$, $e_4$ et 1 étant choisis de sorte que :

$$\frac{e_1}{2} + e_2 + e_3 + e_4 < \frac{n \times l}{4}$$

la couche formant filtre coloré (2), la couche de verre ou de $SiO_2$ (13) et la couche formant polariseur (8) constituant lesdits seconds moyens de confinement transparents,
- mise en place d'un réflecteur (9) destiné à réfléchir de la lumière traversant les seconds moyens de confinement transparents sur la face libre de la couche formant polariseur (8).

8.  Procédé selon la revendication 7, **caractérisé en ce que**, lors de l'étape de réalisation de la structure, lesdits premiers moyens de confinement transparents utilisés sont des moyens de confinement comprenant respectivement, entre leur face interne et leur face externe, une lame de verre (4) et une couche formant polariseur (5).

9.  Procédé selon la revendication 7, **caractérisé en ce que**, lors de l'étape de réalisation de la structure, lesdits premiers moyens de confinement transparents utilisés ne comprennent qu'une lame de verre (4), le procédé comprenant une étape supplémentaire, postérieure à l'étape d'amincissement du support (10), consistant à disposer un polariseur (5) sur la lame de verre (4) des premiers moyens de confinement transparents, côté face externe de la structure.

10.  Procédé selon la revendication 7, **caractérisé en ce que** l'amincissement du support (10) est réalisé par une méthode choisie parmi la rectification, le polissage mécano-chimique et l'attaque chimique.

11.  Procédé selon la revendication 7, **caractérisé en ce que**, lors de l'étape de réalisation de la structure, le support (10) utilisé comprend ladite couche de verre ou de $SiO_2$ (13) d'épaisseur $e_3$ et d'indice de réfraction n séparée du reste (11) du support par une couche d'arrêt (12), l'étape d'amincissement du support consistant à éliminer d'abord le reste (11) du support puis à éliminer la couche d'arrêt (12).

12.  Procédé selon la revendication. 11, **caractérisé en ce que** l'élimination du reste (11) du support est obtenue par attaque chimique.

13.  Procédé selon la revendication 11, **caractérisé en ce que** l'élimination de la couche d'arrêt (12) est réalisée par gravure chimique.

14.  Procédé selon la revendication 7, **caractérisé en ce que**, lors de l'étape de réalisation de la structure, le support utilisé comprend ladite couche de verre ou de $SiO_2$ d'épaisseur $e_3$ et d'indice de réfraction n séparée du reste du support par une couche de séparation, l'étape d'amincissement du support consistant à éliminer le reste du support jusqu'à la couche de séparation.

15.  Procédé selon la revendication 7, **caractérisé en ce que**, lors de l'étape de réalisation de la structure, lesdits premiers moyens de confinement font partie d'un substrat épais, le procédé comprenant alors en outre une étape d'amincissement de ce substrat épais pour ne conserver que les premiers moyens de confinement.

16.  Procédé selon l'une quelconque des revendications 7 à 15, **caractérisé en ce que**, lors de l'étape de réalisation de la structure, une matrice active est associée aux premières électrodes transparentes ou aux secondes électrodes transparentes.

17.  Procédé de réalisation d'un écran plat à cristal liquide comprenant une couche de cristal liquide confinée entre des premiers moyens de confinement transparents et des seconds moyens de confinement transparents, le procédé comprenant les étapes suivantes :

- réalisation d'une structure comprenant en vis-à-vis lesdits premiers moyens de confinement transparents et un support, lesdits premiers moyens de confinement transparents possédant une face externe à la structure destinée à recevoir de la lumière incidente à l'écran et une face interne à la structure supportant une couche formant filtre coloré constituée d'une mosaïque d'éléments de largeur 1, la couche formant filtre coloré supportant des premières électrodes transparentes d'application d'un champ électrique au cristal liquide, la partie du support située en vis-à-vis des premiers moyens de confinement transparents étant en verre ou en $SiO_2$ d'indice de réfraction n et supportant des secondes électrodes transparentes d'application d'un champ électrique au cristal liquide, une couche de cristal liquide d'épaisseur $e_1$ étant confinée entre les seconds moyens de confinement transparents et la couche formant filtre coloré,

- amincissement du support pour ne conserver qu'une couche de verre ou de $SiO_2$ d'épaisseur $e_3$ et d'indice de réfraction n supportant les secondes électrodes transparentes,

- collage d'une couche formant polariseur d'épaisseur $e_4$ sur la face libre de la couche de verre ou de $SiO_2$, les paramètres $e_1$, $e_3$, $e_4$ et 1 étant choisis de sorte que :

$$\frac{e_1}{2} + e_3 + e_4 < \frac{n \times 1}{4}$$

la couche de verre ou de $SiO_2$ et la couche formant polariseur constituant lesdits seconds moyens de confinement transparents,

- mise en place d'un réflecteur destiné à réfléchir de la lumière traversant les seconds moyens de confinement transparents sur la face libre de la couche formant polariseur.

**18.** Procédé selon la revendication 17, **caractérisé en ce que**, lors de l'étape de réalisation de la structure, lesdits premiers moyens de confinement transparents utilisés sont des moyens de confinement comprenant respectivement, entre leur face interne et leur face externe, la couche formant filtre coloré, une lame de verre et une couche formant polariseur.

**19.** Procédé selon la revendication 17, **caractérisé en ce que**, lors de l'étape de réalisation de la structure, lesdits premiers moyens de confinement transparents utilisés ne comprennent qu'une lame de verre et la couche formant filtre coloré, le procédé comprenant une étape supplémentaire, postérieure à l'étape d'amincissement du support, consistant à disposer un polariseur sur la lame de verre des premiers moyens de confinement transparents, côté face externe de la structure.

**20.** Procédé selon la revendication 17, **caractérisé en ce que** l'amincissement du support est réalisé par une méthode choisie parmi la rectification, le polissage mécano-chimique et l'attaque chimique.

**21.** Procédé selon la revendication 17, **caractérisé en ce que**, lors de l'étape de réalisation de la structure, le support utilisé comprend ladite couche de verre ou de $SiO_2$ d'épaisseur $e_3$ et d'indice de réfraction n séparée du reste du support par une couche d'arrêt, l'étape d'amincissement du support consistant à éliminer d'abord le reste du support puis à éliminer la couche d'arrêt.

**22.** Procédé selon la revendication 21, **caractérisé en ce que** l'élimination du reste du support est obtenue par attaque chimique.

**23.** Procédé selon la revendication 21, **caractérisé en ce que** l'élimination de la couche d'arrêt est réalisée par gravure chimique.

**24.** Procédé selon la revendication 17, **caractérisé en ce que**, lors de l'étape de réalisation de la structure, le support utilisé comprend ladite couche de verre ou de $SiO_2$ d'épaisseur $e_3$ et d'indice de réfraction n séparée du reste du support par une couche de séparation, l'étape d'amincissement du support consistant à éliminer le reste du support jusqu'à la couche de séparation.

**25.** Procédé selon la revendication 17, **caractérisé en ce que**, lors de l'étape de réalisation de la structure, lesdits premiers moyens de confinement font partie d'un substrat épais, le procédé comprenant alors en outre une étape d'amincissement de ce substrat épais pour ne conserver que les premiers moyens de confinement.

**26.** Procédé selon l'une quelconque des revendications 17 à 25, **caractérisé en ce que**, lors de l'étape de réalisation de la structure, une matrice active est associée aux premières électrodes transparentes ou aux secondes électrodes transparentes.

**Claims**

**1.** Liquid crystal flat screen operating in reflective mode comprising a liquid crystal layer (3) with thickness $e_1$ confined between first transparent confinement means and second transparent confinement means, the first transparent confinement means being provided with an outer face that will receive incident light arriving on the screen, and an inner face supporting first transparent electrodes (6) used to apply an electric field to the liquid crystal, the second transparent confinement means being provided with an outer face supporting a reflector (9) that will reflect light passing through the second transparent confinement means, and an inner face supporting second transparent electrodes (7) for application of an electric field to the liquid crystal, **characterized by** one of the following alternatives:

- either, the second transparent confinement means comprise a layer between their inner and outer faces, forming a colored filter (2) with thickness $e_2$ and composed of a mosaic of elements with width 1, a layer of glass or $SiO_2$ (13) with thickness $e_3$ and refraction index n and a layer forming a polarizer (8) with thickness $e_4$, the parameters $e_1$, $e_2$, $e_3$, $e_4$ and 1 being chosen such that:

$$\frac{e_1}{2} + e_2 + e_3 + e_4 < \frac{n \times l}{4},$$

- or, the first transparent confinement means comprise a layer between their inner and outer faces forming a colored filter composed of a mosaic of elements with width 1, and the second transparent confinement means comprise a glass or $SiO_2$ layer between their inner and outer faces with thickness $e_3$ and refraction index n, and a layer forming a polarizer with thickness $e_4$, the parameters $e_1$, $e_3$, $e_4$ and 1 being chosen such that:

$$\frac{e_1}{2} + e_3 + e_4 < \frac{n \times l}{4}.$$

**2.** Liquid crystal flat screen according to claim 1, **characterized in that** the reflector (9) is a metallic film.

**3.** Liquid crystal flat screen according to either claim 1 or 2, **characterized in that** the layer forming the polarizer (8) of the second transparent confinement means is made of plastic.

**4.** Liquid crystal flat screen according to any one of claims 1 to 3, **characterized in that** the first transparent confinement means comprise a glass strip (4) and a layer forming a polarizer (5) between their inner and outer faces.

**5.** Liquid crystal flat screen according to claim 4, **characterized in that** the layer forming a polarizer (5) of the first transparent confinement means is made of plastic material.

**6.** Liquid crystal flat screen according to any one of claims 1 to 5, **characterized in that** the first transparent confinement means or the second transparent confinement means support an active matrix associated with the transparent electrodes supported by these transparent confinement means.

**7.** Method for manufacturing a liquid crystal flat screen comprising a liquid crystal layer (3) confined between the first transparent confinement means and the second transparent confinement means, the method comprising the following steps:

- make a structure comprising said first transparent confinement means facing a support (10), said first transparent confinement means being provided with an outer face external to the structure that will receive light incident to the screen, and a face internal to the structure supporting first transparent electrodes (6) for application of an electric field to the liquid crystal, the part of the support facing the first transparent confinement means being made of glass or $SiO_2$ with a refraction index n and supporting a layer forming a colored filter (2) with thickness $e_2$ and composed of a mosaic of elements with width 1, the layer forming the colored filter (2) supporting second transparent electrodes (7) for application of an electric field to the liquid crystal, a layer of liquid crystal (3) with thickness $e_1$ being confined between the first transparent confinement means and the layer forming a colored filter (2),

- thinning of the support (10) to keep only a glass or $SiO_2$ layer (13) with thickness $e_3$ and refraction index n adjacent to the layer forming a colored filter (2),

- gluing of a layer forming a polarizer (8) with thickness $e_4$ on the free face of the glass layer or $SiO_2$ layer (13), the parameters $e_1$, $e_2$, $e_3$, $e_4$ and 1 being chosen such that:

$$\frac{e_1}{2} + e_2 + e_3 + e_4 < \frac{n \times l}{4}$$

the layer forming a colored filter (2), the glass or $SiO_2$ layer (13) and the layer forming a polarizer (8) forming said second transparent confinement means,

- placement of a reflector (9) to reflect light passing through the second transparent confinement means on the free face of the layer forming a polarizer (8).

8. Method according to claim 7, **characterized in that**, during the structure manufacturing step, said first transparent confinement means used are confinement means comprising a glass strip (4) and a layer forming a polarizer (5) between their inner and outer faces.

9. Method according to claim 7, **characterized in that**, during the structure manufacturing step, said first transparent confinement means used only include a glass strip (4), the method comprising an additional step subsequent to the support (10) thinning step, consisting of placing a polarizer (5) on the glass strip (4) of the first transparent confinement means, on the outer face of the structure.

10. Method according to claim 7, **characterized in** the support (10) is thinned by a method chosen from among grinding, mechanical-chemical polishing and chemical attack.

11. Method according to claim 7, **characterized in that**, during the structure manufacturing step, the support (10) used comprises said glass or $SiO_2$ layer (13) with thickness $e_3$ and refraction index n separated from the remainder (11) of the support by a stop layer (12), the support thinning step consisting of firstly eliminating the remainder (11) of the support and then eliminating the stop layer (12).

12. Method according to claim 11, **characterized in that** the remainder (11) of the support is eliminated by chemical attack.

13. Method according to claim 11, **characterized in that** the stop layer (12) is eliminated by etching.

14. Method according to claim 7, **characterized in that**, during the structure manufacturing step, the support used includes said glass or $SiO_2$ layer with thickness $e_3$ and refraction index n separated from the remainder of the support by a separation layer, the thinning step of the support consisting of eliminating the remainder of the support as far as the separation layer.

15. Method according to claim 7, **characterized in that**, during the structure manufacturing step, said first confinement means form part of the thick substrate, the method then also comprising a step for thinning this thick substrate to keep only the first confinement means.

16. Method according to any one of claims 7 to 15, **characterized in that**, during the structure manufacturing step, an active matrix is associated with the first transparent electrodes or the second transparent electrodes.

17. Method for manufacturing a flat liquid crystal screen comprising a liquid crystal layer confined between first transparent confinement means and second transparent confinement means, the method comprising the following steps:

- manufacture of a structure comprising said first transparent confinement means and a support facing each other, said first transparent confinement means being provided with a face external to the structure that will receive light incident to the screen, and a face internal to the structure supporting a layer forming a colored filter composed of a mosaic of elements of width 1, the layer forming a colored filter supporting first transparent electrodes for application of an electric field to the liquid crystal, the part of the support facing the first transparent confinement means being made of glass or $SiO_2$ with a refraction index n and supporting second transparent electrodes for application of an electric field to the liquid crystal, a liquid crystal layer with a thickness $e_1$ being confined between the second transparent confinement means and the layer forming a colored filter,

- thinning of the support to keep only a glass or $SiO_2$ layer with thickness $e_3$ and refraction index n supporting the second transparent electrodes,

- gluing of a layer forming a polarizer wich thickness $e_4$ on the free face of the glass or $SiO_2$ layer, the parameters $e_1$, $e_2$, $e_3$, $e_4$ and 1 being chosen such that:

$$\frac{e_1}{2} + e_3 + e_4 < \frac{n \times l}{4}$$

the glass or $SiO_2$ layer and the layer forming the polarizer making up said second transparent confinement means,

- placement of a reflector designed to reflect light passing through the second transparent confinement means on the free face of the layer forming the polarizer.

18. Method according to claim 17, **characterized in that**, during the structure manufacturing step, said first transparent confinement means used are confinement means that comprise the layer forming a colored filter, a glass strip and a layer forming a polarizer, between their inner and outer faces.

19. Method according to claim 17, **characterized in that**, during the structure manufacturing step, said first transparent confinement means used include only a glass strip and the layer forming a colored filter, the method comprising an additional step subsequent to the support thinning step, consisting of placing a polarizer on the glass strip in the first transparent confinement means, on the outer face of the structure.

20. Method according to claim 17, **characterized in that**, the support is thinned using a method chosen from among grinding, mechanical-chemical polishing and chemical attack.

21. Method according to claim 17, **characterized in that**, during the structure manufacturing step, the support used comprises said glass or $SiO_2$ layer with thickness $e_3$ and refraction index n separate from the remainder of the structure by a stop layer, the support thinning step consisting of firstly eliminating the remainder of the support and then eliminating the stop layer.

22. Method according to claim 21, **characterized in that** the remaining of the support is eliminated by chemical attack.

23. Method according to claim 21, **characterized in that** the stop layer is eliminated by etching.

24. Method according to claim 17, **characterized in that** during the structure manufacturing step, the support used comprises said glass layer or $SiO_2$ layer with thickness $e_3$ and refraction index n separated from the remainder of the structure by a separation layer, the support thinning step consisting of eliminating the remainder of the support as far as the separation layer.

25. Method according to claim 17, **characterized in that** during the structure manufacturing step, said first confinement means form part of a thick substrate, the method then comprising a step to thin this fixed substrate to only keep the first confinement means.

26. Method according to any one of claims 17 to 25, **characterized in that** during the structure manufacturing step, an active matrix is associated with the first transparent electrodes or with the second transparent electrodes.

**Patentansprüche**

1. Im reflektiven Modus arbeitender Flüssigkristall-Flachbildschirm, umfassend eine Flüssigkristallschicht (3) mit der Dicke $e_1$, die zwischen ersten transparenten Einschlußmitteln und zweiten Einschlußmitteln eingeschlossen ist, wobei die ersten transparenten Einschlußmittel eine Außenfläche zum Empfangen von auf den Bildschirm einfallendem Licht und eine Innenfläche besitzen, die erste transparente Elektroden (6) zum Anlegen eines elektrischen Felds an den Flüssigkristall trägt, und die zweiten transparenten Einschlußmittel eine Außenfläche, die einen Reflektor (9) zum Reflektieren von durch die zweiten transparenten Einschlußmittel hindurchgehendem Licht trägt und eine Innenfläche besitzen, die zweite transparente Elektroden (7) zum Anlegen eines elektrischen Felds an den Flüssigkristall trägt, **gekennzeichnet durch** eine der folgenden Alternativen:

   - entweder umfassen die zweiten transparenten Einschlußmittel zwischen ihrer Innenfläche und ihrer Außenfläche eine Schicht, die ein gefärbtes Filter (2) mit der Dicke $e_2$ bildet und die sich aus einem Mosaik aus Elementen der Breite I zusammensetzt, eine Schicht aus Glas oder aus $SiO_2$ (13) der Dicke $e_3$ und dem Brechungsindex n, und eine einen Polarisator (8) bildende Schicht der Dicke $e_4$, wobei die Parameter $e_1$, $e_2$, $e_3$, $e_4$ und I so gewählt sind, daß

   $$\frac{e_1}{2} + e_2 + e_3 + e_4 < \frac{n \times 1}{4},$$

   - oder die ersten transparenten Einschlußmittel umfassen zwischen ihrer Innenfläche und ihrer Außenfläche eine Schicht, die ein gefärbtes Filter bildet, das sich aus einem Mosaik aus Elementen der Dicke I zusammensetzt, und die zweiten transparenten Einschlußmittel umfassen zwischen ihrer Innenfläche und ihrer Außenfläche eine Schicht aus Glas oder aus $SiO_2$ mit der Dicke $e_3$ und dem Brechungsindex n, und eine einen Polarisator bildende Schicht mit der Dicke $e_4$, wobei die Parameter $e_1$, $e_3$, $e_4$ und I so gewählt sind, daß

   $$\frac{e_1}{2} + e_3 + e_4 < \frac{n \times 1}{4}.$$

2. Flüssigkristall-Flachbildschirm gemäß Anspruch 1, **dadurch gekennzeichnet, daß** der Reflektor (9) ein metallischer Film ist.

3. Flüssigkristall-Flachbildschirm gemäß einem der Ansprüche 1 oder 2, **dadurch gekennzeichnet, daß** die den Polarisator (8) bildende Schicht der zweiten transparenten Einschlußmittel aus Kunststoff besteht.

4. Flüssigkristall-Flachbildschirm gemäß einem der Ansprüche 1 bis 3, **dadurch gekennzeichnet, daß** die ersten transparenten Einschlußmittel zwischen ihrer Innenfläche und ihrer Außenfläche einen Glasstreifen (4) und eine einen Polarisator (5) bildende Schicht umfassen.

5. Flüssigkristall-Flachbildschirm gemäß Anspruch 4, **dadurch gekennzeichnet, daß** die einen Polarisator (5) bildende Schicht der ersten transparenten Einschlußmittel aus Kunststoffmaterial besteht.

6. Flüssigkristall-Flachbildschirm gemäß einem der Ansprüche 1 bis 5, **dadurch gekennzeichnet, daß** die ersten transparenten Einschlußmittel oder die zweiten transparenten Einschlußmittel eine aktive Matrix tragen, die mit den durch diese transparenten Einschlußmittel getragenen transparenten Elektroden verbunden ist.

7. Verfahren zur Herstellung eines Flüssigkristall-Flachbildschirms, der eine zwischen den ersten transparenten Einschlußmitteln und den zweiten transparenten Einschlußmitteln eingeschlossene Flüssigkristallschicht (3) umfaßt, wobei das Verfahren die folgenden Schritte umfaßt:

   - Herstellung einer Struktur, die die ersten transparenten Einschlußmittel gegenüber einem Träger (10), wobei die ersten transparenten Einschlußmittel eine Fläche außen auf der Struktur zum Empfangen von auf den Bildschirm einfallendem Licht und eine Fläche innen auf der Struktur besitzen, die die ersten transparenten Elektroden (6) zum Anlegen eines elektrischen Felds an den Flüssigkristall trägt, wobei der gegenüber den ersten transparenten Einschlußmitteln gelegene Teil des Trägers aus Glas oder aus $SiO_2$ mit dem Brechungsindex n besteht und eine Schicht trägt, die ein gefärbtes Filter (2) mit der Dicke $e_2$ bildet und sich aus einem Mosaik aus Elementen der Dicke I zusammensetzt, wobei die das gefärbte Filter (2) bildende Schicht zweite transparente Elektroden (7) zum Anlegen eines elektrischen Felds an den Flüssigkristall trägt, und eine Flüssigkristallschicht (3) mit der Dicke $e_1$ umfaßt, die zwischen den ersten transparenten Einschlußmitteln und der das gefärbte Filter (2) bildenden Schicht eingeschlossen ist,

- Ausdünnen des Trägers (10), um nur eine an die einen gefärbten Filter (2) bildende Schicht angrenzende Schicht aus Glas oder aus $SiO_2$ (13) mit der Dicke $e_3$ und dem Brechungsindex n zu behalten,
- Kleben einer einen Polarisator (8) bildenden Schicht mit der Dicke $e_4$ auf die freie Fläche der Schicht aus Glas oder aus $SiO_2$ (13), wobei die Parameter $e_1$, $e_2$, $e_3$, $e_4$ und I so gewählt sind, daß

$$\frac{e_1}{2} + e_3 + e_3 + e_4 < \frac{n \times 1}{4},$$

und die das gefärbte Filter (2) bildende Schicht, die Schicht aus Glas oder aus $SiO_2$ (13) und die den Polarisator (8) bildende Schicht die zweiten transparenten Einschlußmittel bilden,
- Anbringen eines Reflektors (9) zum Reflektieren von durch die zweiten transparenten Einschlußmittel hindurchgehendem Licht auf der freien Fläche der einen Polarisator (8) bildenden Schicht.

8. Verfahren gemäß Anspruch 7, **dadurch gekennzeichnet, daß** während des Schritts der Herstellung der Struktur die verwendeten ersten transparenten Einschlußmittel Einschlußmittel sind, die zwischen ihrer Innenfläche und ihrer Außenfläche einen Glasstreifen (4) und eine einen Polarisator (5) bildende Schicht umfassen.

9. Verfahren gemäß Anspruch 7, **dadurch gekennzeichnet, daß** während des Schritts der Herstellung der Struktur die verwendeten ersten transparenten Einschlußmittel nur einen Glasstreifen (4) umfassen, wobei das Verfahren einen zusätzlichen Schritt auf den Schritt des Ausdünnens des Trägers (10) folgend umfaßt, der aus dem Anordnen eines Polarisators (5) auf dem Glasstreifen (4) der ersten transparenten Einschlußmittel auf der Fläche außen auf der Struktur besteht.

10. Verfahren gemäß Anspruch 7, **dadurch gekennzeichnet, daß** das Ausdünnen des Trägers (10) durch ein aus Schleifen, mechanisch-chemischem Polieren und chemischem Angriff ausgewähltes Verfahren durchgeführt wird.

11. Verfahren gemäß Anspruch 7, **dadurch gekennzeichnet, daß** während des Schritts der Herstellung der Struktur der verwendete Träger (10) die Schicht aus Glas oder aus $SiO_2$ (13) mit der Dicke $e_3$ und dem Brechungsindex n umfaßt, die von dem Rest (11) des Trägers durch eine Stoppschicht (12) getrennt ist, wobei der Trägerausdünnungsschritt aus zuerst dem Entfernen des Rests (11) des Trägers und anschließend Entfernen der Stoppschicht (12) besteht.

12. Verfahren gemäß Anspruch 11, **dadurch gekennzeichnet, daß** das Entfernen des Rests (11) des Trägers durch chemischen Angriff erhalten wird.

13. Verfahren gemäß Anspruch 11, **dadurch gekennzeichnet, daß** das Entfernen der Stoppschicht (12) durch Ätzen durchgeführt wird.

14. Verfahren gemäß Anspruch 7, **dadurch gekennzeichnet, daß** während des Schritts der Herstellung der Struktur der verwendete Träger die Schicht aus Glas oder aus $SiO_2$ mit der Dicke $e_3$ und dem Brechungsindex n umfaßt, die von dem Rest des Trägers durch eine Trennschicht getrennt ist, wobei der Trägerausdünnungsschritt aus dem Entfernen des Rests des Trägers bis zur Trennschicht besteht.

15. Verfahren gemäß Anspruch 7, **dadurch gekennzeichnet, daß** während des Schritts der Herstellung der Struktur die ersten Einschlußmittel einen Teil eines dicken Substrats bilden, wobei das Verfahren dann auch einen Schritt zum Ausdünnen dieses dicken Substrats unter Erhalten nur der ersten Einschlußmittel umfaßt.

**16.** Verfahren gemäß einem der Ansprüche 7 bis 15, **dadurch gekennzeichnet, daß** während des Schritts der Herstellung der Struktur eine aktive Matrix mit den ersten transparenten Elektroden oder den zweiten transparenten Elektroden verbunden wird.

**17.** Verfahren zur Herstellung eines Flüssigkristall-Flachbildschirms, der eine zwischen den ersten transparenten Einschlußmitteln und den zweiten transparenten Einschlußmitteln eingeschlossene Flüssigkristallschicht umfaßt, wobei das Verfahren die folgenden Schritte umfaßt:

- Herstellung einer Struktur, die die ersten transparenten Einschlußmittel gegenüber einem Träger, wobei die ersten transparenten Einschlußmittel eine Fläche außen auf der Struktur zum Empfangen von auf den Bildschirm einfallendem Licht und eine Fläche innen auf der Struktur besitzen, die eine Schicht trägt, die ein gefärbtes Filter bildet und sich aus einem Mosaik aus Elementen der Dicke I zusammensetzt, wobei die das gefärbte Filter bildende Schicht erste transparente Elektroden zum Anlegen eines elektrischen Felds an den Flüssigkristall trägt, wobei der gegenüber den ersten transparenten Einschlußmitteln gelegene Teil des Trägers aus Glas oder aus $SiO_2$ mit dem Brechungsindex n ist und die zweiten transparenten Elektroden zum Anlegen eines elektrischen Felds an den Flüssigkristall tragen, und eine Flüssigkristallschicht mit der Dicke $e_1$ umfaßt, die zwischen den zweiten transparenten Einschlußmitteln und der das gefärbte Filter bildenden Schicht eingeschlossen ist,
- Ausdünnen des Trägers, um nur eine an die einen gefärbten Filter bildende Schicht angrenzende Schicht aus Glas oder aus $SiO_2$ mit der Dicke $e_3$ und dem Brechungsindex n zu behalten, die die zweiten transparenten Elektroden trägt,
- Kleben einer einen Polarisator bildenden Schicht mit der Dicke $e_4$ auf die freie Fläche der Schicht aus Glas oder aus $SiO_2$, wobei die Parameter $e_1$, $e_3$, $e_4$ und I so gewählt sind, daß

$$\frac{e_1}{2} + e_3 + e_4 < \frac{n \times 1}{4}.$$

und die Schicht aus Glas oder aus $SiO_2$ und die einen Polarisator bildende Schicht die zweiten transparenten Einschlußmittel bilden,
- Anbringen eines Reflektors zum Reflektieren von durch die zweiten Einschlußmittel hindurchgehendem Licht auf der freien Fläche der einen Polarisator bildenden Schicht.

**18.** Verfahren gemäß Anspruch 17, **dadurch gekennzeichnet, daß** während des Schritts der Herstellung der Struktur die verwendeten ersten transparenten Einschlußmittel Einschlußmittel sind, die zwischen ihrer Innenfläche und ihrer Außenfläche die ein gefärbtes Filter bildende Schicht, einen Glasstreifen und eine einen Polarisator bildende Schicht umfassen.

**19.** Verfahren gemäß Anspruch 17, **dadurch gekennzeichnet, daß** während des Schritts der Herstellung der Struktur die verwendeten ersten transparenten Einschlußmittel nur einen Glasstreifen und die ein gefärbtes Filter bildende Schicht umfassen, wobei das Verfahren einen zusätzlichen Schritt auf den Schritt des Ausdünnens des Trägers folgend umfaßt, der aus dem Anordnen eines Polarisators auf dem Glasstreifen der ersten transparenten Einschlußmittel auf der Fläche außen auf der Struktur besteht.

**20.** Verfahren gemäß Anspruch 17, **dadurch gekennzeichnet, daß** das Ausdünnen des Trägers durch ein aus Schleifen, mechanisch-chemischem Polieren und chemischem Angriff ausgewähltes Verfahren durchgeführt wird.

**21.** Verfahren gemäß Anspruch 17, **dadurch gekennzeichnet, daß** während des Schritts der Herstellung der Struktur der verwendete Träger die Schicht aus Glas oder aus $SiO_2$ mit der Dicke $e_3$ und dem Brechungsindex n umfaßt, die von dem Rest des Trägers durch eine Stoppschicht getrennt ist, wobei der Trägerausdünnungsschritt aus zuerst dem Entfernen des Rests des Trägers und anschließend Entfernen der Stoppschicht besteht.

**22.** Verfahren gemäß Anspruch 21, **dadurch gekennzeichnet, daß** das Entfernen des Rests des Trägers durch chemischen Angriff erhalten wird.

**23.** Verfahren gemäß Anspruch 21, **dadurch gekennzeichnet, daß** das Entfernen der Stoppschicht durch Ätzen durchgeführt wird.

24. Verfahren gemäß Anspruch 17, **dadurch gekennzeichnet, daß** während des Schritts der Herstellung der Struktur der verwendete Träger die Schicht aus Glas oder aus $SiO_2$ mit der Dicke $e_3$ und dem Brechungsindex n umfaßt, die von dem Rest des Trägers durch eine Trennschicht getrennt ist, wobei der Trägerausdünnungsschritt aus dem Entfernen des Rests des Trägers bis zur Trennschicht besteht.

25. Verfahren gemäß Anspruch 17, **dadurch gekennzeichnet, daß** während des Schritts der Herstellung der Struktur die ersten Einschlußmittel einen Teil eines dicken Substrats bilden, wobei das Verfahren dann auch einen Schritt zum Ausdünnen dieses dicken Substrats unter Erhalten nur der ersten Einschlußmittel umfaßt.

26. Verfahren gemäß einem der Ansprüche 17 bis 25, wobei während des Schritts der Herstellung der Struktur eine aktive Matrix mit den ersten transparenten Elektroden oder den zweiten transparenten Elektroden verbunden wird.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11249108 B
- EP 0924769 A
- FR 2681472 A
- US 5374564 A
- FR 2748851 A
- US 6020252 A
- FR 2748850 A
- US 6190998 B
- FR 2773261 A

**Littérature non-brevet citée dans la description**

- **T. HAMAGUCHI et al.** *Proc. IEDM,* 1985, 688
- **S. UTSUNOMIYA et al.** *Proc. IDS,* 2000, 916